# EUROPEAN PATENT APPLICATION

(11) **EP 4 552 839 A1**
(43) Date of publication of application: **14.05.2025**
(21) Application number: 23209208.0
(22) Date of filing: 10.11.2023
(51) Int. Cl.: B32B 5/02, B32B 27/08, B32B 27/12, B32B 27/32, B32B 27/34, B32B 27/36

(54) **THERMAL INSULATION CLADDING FOR VEHICLE APPLICATIONS**

(71) Applicant: Autoneum Management AG, 8406 Winterthur (CH)
(72) Inventor: Hauenstein, Michael, 8408 Winterthur (CH)

(57) **Abstract**

Thermal insulation cladding (9 for automotive applications comprising at least a thermoplastic airtight core layer comprising filaments or cut fibers embedded in a thermoplastic matrix, characterised in that the thermal resistance (R-value) of the core layer is at least 0.0025 m².K/W per mm of thickness, and the total thermal resistance (R-value) of the thermal insulation cladding is at least between 0.004 and 0.15 m².K/W, preferably between 0.01 and 0.04 m².K/W, more preferably between 0.01 and 0.035 m².K/W.

## Description

### Technical Field

The invention is related to a thermal insulation cladding part for vehicle applications specifically for areas prone to rough conditions, like thermal insulation shields of batteries as used in battery electric vehicles, for instance passenger cars, vans or trucks or thermal insulation of passenger compartments or thermal sensitive automotive appliances.

### Background Art

In all areas of driving, autos, vans and trucks, a move to full battery electric vehicles is foreseen. Battery electric vehicles comprise batteries for the traction needed to drive the car. These batteries or battery cells are combined into battery packs and stored within a battery box mostly located underneath the passenger compartment between the wheels of the car. Due to the omission of fuel-based engines, the heating can no longer rely on the heat coming from the combustion process. So, all heat necessary for different functions within the vehicle, like thermal control of batteries and thermal relevant appliances, as well as thermal control of the passenger's compartment is relying on the energy stored in the batteries, this will therefore directly influence the range the vehicle can drive without having to recharge. So, there is an increased need for a better thermal management of the vehicle, both passive and active.

For example, within the battery pack a thermal management system is required to safely use the battery module by efficiently emitting, discharging and/or dissipating heat generated from the rechargeable batteries. On cold or extreme hot days, a thermal management system including active and passive cooling maintains a constant temperature within the battery cells to guarantee an optimal battery performance. During cold winter conditions where the external temperature is lower than the battery cell temperature or during hot summers where the external temperature is higher than the battery cell temperature the thermal management system needs increased power to maintain the ideal temperature conditions for the battery cells.

Thermal runaway is one of the primary risks related to lithium-ion batteries. It is a phenomenon in which the lithium-ion cell enters an uncontrollable, self-heating state. Thermal runaway can result in: ejection of gas, shrapnel and/or particulates. A vehicle involved in a mayor impact event might risk mayor damage to the battery box, which may induce a thermal runaway, endangering any passengers within the car as well as possible bystanders.

As a car is driving on all sorts of roads, impact events small and large may be happening regularly. Stones and debris are thrown against the lower surface of the car, while the car might hit a curb stone or a stone that was dislodge on the road in a bigger event. An accumulation of such events or an impact with a large object may cause a puncture or dent into the battery box and may induce such a thermal runaway. This needs to be avoided at all times.

The current material used for the box and any protection is mainly metal like steel or aluminium. The metal casing although good to reduce heat within the box is in the first 3 hours of driving in a cold environment counterproductive in maintaining a good battery temperature. This is even more of a concern as a fast recharging of the batteries is not possible at unfavourable temperature conditions. Hence, after a 3-hour drive in winter no fast recharging is possible, resulting in a reduction of the overall range that can be achieved in colder climates. This effect could even be observed in cars starting with an ideal temperature, even in such a situation the thermal management system was not able to maintain the temperature initially.

Not only around the battery, but vehicles, like trucks, vans or passenger cars may have other areas that benefit from passive thermal insulation, like for instance around non traction batteries, walls in passenger cabins and/or truck cabins and or underneath the lower surface of the car body. Vehicles, like trucks, vans or passenger cars may comprise panels or trim parts placed at the exterior of the vehicle for various reasons. Such panels or trim parts are prone to harsh conditions, like water spray, both rain and dirty road water or stone chipping. Much of these panels or trim parts are still made of metal and would not add to the thermal insulation of the internal areas.

Very often the metal is the material of choice for areas prone to harsh conditions. While compressed fibrous solutions or foam solutions are good for thermal insulation but fail under high impact loads. Combining thick metal plates for impact and fibrous or foam layers for thermal management might seem an option but increases the complexity and the weight of the overall system, without showing synergistic effects. Using a compressed porous material as cladding on the outer surface of the battery or another area in need of thermal insulation, might enhance thermal insulation, but is not strong enough to withstand harsh conditions like impact events.

There is a need for a thermal insulation cladding for vehicle applications prone to rough conditions or high mechanical requirements, which provides for the required impact protection and or other requirements while reducing the impact of ambient temperatures on active thermal management of the vehicle either of components like the battery or areas like passenger compartment or driver cabin. It is therefore the goal of the current invention to overcome the problems of the prior art and or to address the thermal needs.

### Summary of invention

The object of the invention is achieved by a thermal insulation cladding for automotive applications comprising at least a thermoplastic airtight core layer comprising cut fibers embedded in a thermoplastic matrix according to claim 1, and the use of such a thermal insulation cladding according to 14.

In particular by a thermal resistance (R-value) of the core layer being at least 0.0025 m².K/W per mm of thickness and a total thermal resistance (R-value) of the thermal insulation cladding being between 0.004 and 0.15 m².K/W, preferably between 0.01 and 0.04 m².K/W, more preferably between 0.01 and 0.035 m².K/W it is possible to reduce the negative thermal effects of ambient temperature on the active thermal management of the car.

The heat flow across the thermal cladding, between the side exposed to the thermal source and the other side of the thermal cladding itself, is important for the insulation effect. To obtain a retention of heat during a cold season and a reduction of heat during a hot season, it is important that the insulation is adapted to prevent overheating or too quick cooling. The thermal insulation needed may be further related to active thermal management systems and the time these systems need to obtain and maintain the desired temperature. It was found that by maintaining the total thermal resistance within the range claimed it is possible to maintain long enough the heat during colder periods without overheating the protected area, for instance the battery, during hot periods.

For example, a metal battery housing covered with a cladding according to the invention may reduce its time to actively control the temperature from over 3 hours to 30 minutes, meaning that already after 30 minutes' drive in a cold climate it is possible to fast charge the battery as well as reduce the energy needed to obtain and maintain the preferred operational temperature of the battery.

By adapting the matrix and or fiber material of the core layer, the thickness of the layers and the combination of layers used, it is possible to adapt the R-value of the single layer and the total value of all layers combined. This is advantageous in automotive situations where the thickness available for the thermal insulation is restricted and or where additional requirements like for instance structural stiffness or impact protection must be met.

Preferably the thermoplastic matrix of the airtight core layer may be a polyamide based or polyolefin based material.

More preferably the matrix of the airtight core layer comprises at least one polyolefin, like for instance a polypropylene or polyethylene.

More preferably the matrix of the airtight core layer comprises a homopolymer of polypropylene and an olefin-based copolymer, preferably a block copolymer, preferably a polypropylene-polyethylene copolymer.

The matrix of the core layer may comprise not more than 30% by weight of the olefin-based copolymer.

Surprisingly by obtaining a more random structure in the thermoplastic matrix it is possible to influence the thermal resistance of the core layer.

Preferably the core is made with D-LFT process whereby tows of fibers - glass and or natural, are fed to the extruder with matrix and by the action of the extruder the tows are chopped or cut in long fibers. Preferably the long fibers have an average length between 10 and 25 mm for most of the fibers, depending on the extruder used. The length is longer than may be obtained with injection moulding processes where precut pellets are used with a much smaller length of fibers. Another advantage of using D-LFT is that the direction of the fibers is mainly in plane with the surface of the part, hence thermal bridges between one side and the opposite side of the cladding is less likely.

Surprisingly, the preferred production process, D-LFT, further influences the thermal resistance of the airtight core layer, as it enhances the direction of the fibers in a preferred horizontal - in plane - direction of the fibers, minimising thermal bridging between the surfaces of the thermal cladding.

Preferably the cut fibers of the airtight core layer are natural fibers and or glass fibers, or a mixture of such fibers.

By using glass fibers, the structural features of the cladding may be enhanced, in particular the stiffness and impact protection, however by using natural fibers the stiffness may be less increased, but the thermal insulation may be increased. By adapting the amount and nature of the fibers the R value may be optimised, this is important in those situations where a higher need for impact is given or where there is only space for a thin cladding part.

Preferably the cut fiber content of the airtight core is between 10 and 35% by weight to enhance the mechanical properties without reducing the beneficial thermal insulation.

Thermal insulation cladding according to the invention may further comprise skin layers, whereby each skin layer comprises at least one layer of substantially parallel endless filaments in a second thermoplastic matrix, and whereby both surfaces of the core layer are covered with at least a skin layer to form a sandwich structure, and whereby the thermal resistance (R-value) of the skin is not more than 0.0025 m².K/W per mm of thickness.

The parallel endless filaments may be used in the form of an UD tape layer or Organosheet, and may be used in one or more layers -plies to form the skin layer. UD tapes or Organosheet come already pre-embedded into the second thermoplastic matrix.

The thermoplastic matrix for the skin layers may comprise a polyamide based material or a polyolefin based material, preferably a polypropylene or a polyethylene based material. Preferably the matrix or the skins and the core are compatible to enable a strong bonding between both materials. Preferably the matrix and the skins are the same or a similar material. For instance all based on polypropylene or all based on polyamide.

The skin layer may comprise at least 1, and preferably between 3 and 9 layers or plies of substantially parallel endless filaments whereby the parallel endless filaments of one layer or ply may be used parallel or perpendicular to those of the adjacent layer or layers.

The parallel endless filament layers in the skins may have a filament content of between 50% and 84% by weight. The filaments are preferably glass or natural based, for instance hemp or kenaf.

Although these layers have a high filament content due to the direction parallel to the surface the thermal conductivity is kept low, as no direct thermal bridging is given between both adjacent surface areas of the thermal cladding. Surprisingly by combining the airtight core with the cut fibers with the skins it is possible to create a thermal cladding insulative enough to enable thermal management systems in the vehicle to obtain and or maintain the temperature required for the area controlled.

The skins may have a difference in filament content to balance out both sides of the part for instance to counteract on warping. The total content of filaments between both skins differ at least by 10% by weight.

Areas of the vehicle, in need of thermal insulation, that are in addition prone to high impact events, the use of the airtight core combined with the skins according to the invention is the preferred option, depending on the impact requirements, this may include using glass in the core and or the skins. While on areas less prone to direct impact the use of the airtight core may be sufficient enough to obtain a covering and the necessary thermal insulation.

The thermal insulation cladding according to the invention may comprise further layers, in particularly at the side of the cladding facing away from direct impact. For instance, for underside panels the side not facing the road, thus facing towards the body of the car may be preferred for additional layers.

One example for such a further layer may be a fibrous nonwoven layer comprising staple fibers or endless filaments and a thermoplastic binder, whereby the fibrous nonwoven layer has a thermal resistance (R-value) of at least 0.070 m2.K/W per mm. Depending on the thickness of the layer and the compression, such an additional layer may boost the overall thermal insulation.

Preferably, the cut fibers or endless filaments and the thermoplastic binder of the fibrous nonwoven layer are terephthalate based, preferably polyethylene terephthalate (PET) or polybutylene terephthalate (PBT).

The thermal insulation cladding according to the invention may be used as a thermal battery shield, a thermal underbody shield, a thermal shield for a battery box, exterior or interior cladding for car body parts, including any of a dash panel, door panel, flooring panel or trunk floor panel.

The thermal insulation cladding may be used in personal cars, vans or trucks.

Thermal conductivity and thermal insulation are measured according to ASTM C-518 and recorded at 20°C, except if explicitly stated otherwise. Furthermore, given values are across the thickness of the part, perpendicular to the surface of the cladding.

### Figures

Figure 1 is a cross section of the thermal cladding according to the invention.
Figure 2 is an example of use of the thermal cladding as a thermal insulation for a battery housing of a vehicle.
Figure 3 is showing an example for the layout of the thermal cladding of figure 2.

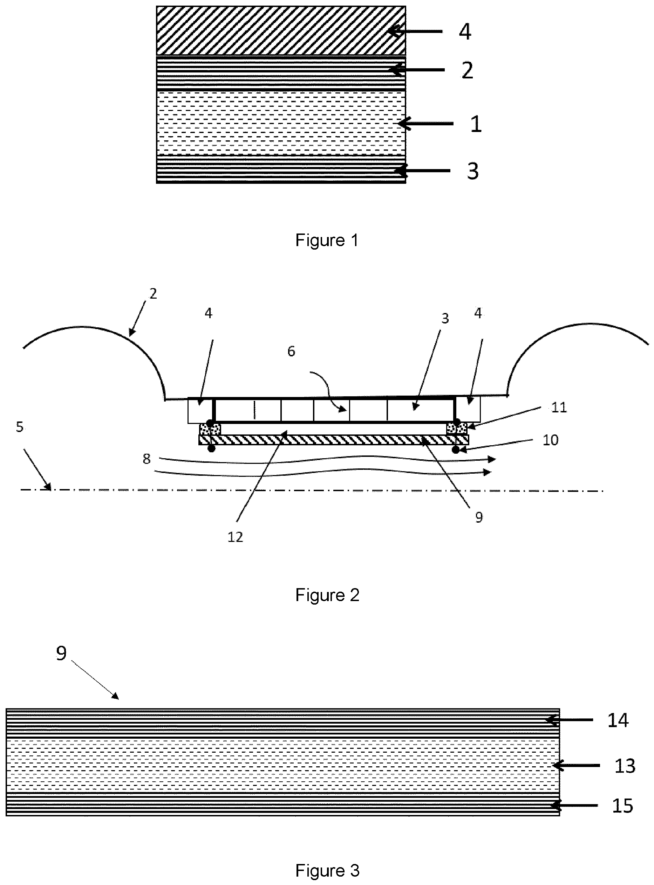

Figure 1 shows a possible layout of a thermal cladding with all possible layers combined. The thermal cladding according to the invention comprises at least a thermoplastic airtight core layer 1 comprising cut fibers embedded in a thermoplastic matrix, characterised in that the thermal resistance (R-value) of the core layer is at least 0.0025 m².K/W per mm of thickness.

Further optional a set of skin layers 2, 3 may be used to form a sandwich structure more optimised for harsher conditions like for instance impact, or contact with stones, roadblocks, curb stones or pot holes, comprising at least one layer of substantially parallel organised endless filaments in a second thermoplastic matrix, and whereby both surfaces of the core layer are covered with at least a skin layer to form a sandwich structure, and whereby the thermal resistance (R-value) of each skin material is at least 0.0025 m².K/W per mm of thickness.

Optional an additional fibrous layer, together with the skin layers, or without the skin layers may be used to further enhance the thermal insulation of the cladding. The advantage combination of the airtight core layer with a fibrous layer, combines a structural stiff layer with a higher thermal insulating material, whereby the combined thermal resistance can be optimized as well as the need for other requirements like stiffness, or impact protection. So, it becomes possible to create a cladding that is enough to reduce the heat losses while being strong enough to withstand harsh conditions.

A combination of the core layer with both skins would give a strong impact protection and thermal insulation while an additional use of a fibrous layer can further enhance the thermal insulation. The use of the fibrous layer may in addition fill up any cavity between the surface to be insulated and the surface of the cladding, preventing any draft between both surfaces diminishing the insulating effect.

In one example a thermal insulating shield may be used to insulate a lower surface of a battery box. Battery electric vehicles have a battery box placed underneath the passenger compartment. As a battery may be the cause of a serious thermal runaway event in case of damage, the surrounding battery box is made of a thick metal structure. However due to the metal structure it is difficult to obtain and maintain the battery at an optimal temperature in colder climates. At a cold start of a vehicle, the thermal system of the battery needs to reach the optimal temperature, while the thermal conductivity of the metal casing prevents any increase in temperature. It was found that even if the battery was preconditioned, before driving in a colder climate, the thermal system was not able to maintain the temperature in the battery pack. This has consequences for the speed loading of energy at charging stations, as the battery does not accept speed loading of batteries under a certain temperature.

Surprisingly, battery cell temperatures can be kept or brought to target condition faster when the battery is shielded/insulated from less-than-optimal environment conditions (e.g. much colder or hotter than the battery cell temperature), furthermore, also cool-down and soaking can be delayed when parked. In a study case, at 0°C Winter condition and following a 3h drive cycle, a generic battery model would show a heat loss of between 1.4 and 1.8kWh. By using a thermal cladding with the airtight core layer according to the invention, it was possible to reduce the heat loss by almost 50% or more. While extreme ambient condition require high insulation, milder ambient conditions may support passive battery temperature conditioning. An ideal balance can be achieved by tuning the cladding configuration.

It could be shown that by using the airtight core layer according to the invention as thermal cladding the time before the thermal management system would be able to create and maintain a stable temperature could be reduced significantly.

Figure 3 is showing a vehicle with a body structure (2) and wheels (1). Underneath the body structure a battery housing (3) is mounted facing the road (5). The battery housing (3) might be made of a metal able to withstand impact, within the housing a frame structure (6) of sorts might be mounted to the internal wall of the battery housing to guarantee a good fixation of the battery cells and or modules within the battery housing. Side beams (4) might be placed alongside the walls of the battery housing and fixed preferably to the body structure to form a stiffened zone that can withstand impact on the car and in particular the battery box during a crash of the car, reducing the risks on the battery modules.

In the state of the art, the battery modules inside a metal battery housing are cooled or heated to maintain the temperature within a certain range, however the metal frame structure (6) structurally connected to the battery housing is forming a temperature bridge to the other side of the battery housing wall. Hence heat is able to radiate from the outside wall to the environment. This is independent from any thermal insulating material placed within the battery housing structure.

As the battery housing is directly exposed to the outside environment, in particularly during driving, a flow of air (8) is passing the lower area of the battery box cooling or heating the outside of the battery box even further, thereby reducing the thermal management efforts within the battery housing. This will increase the energy used for maintaining a constant temperature of the battery elements and or modules.

In a first embodiment, a thermal cladding 9 according to the invention is placed adjacent the battery housing. The thermal cladding may be glued over the full surface or only around the rim, leaving a minimal enclosed air layer 12 between the surfaces. Even a minimal enclosed air layer is already sufficient to decouple the surface of the battery housing thermally radiating and the thermal cladding further optimising the thermal insulation of the battery.

The means for mounting (10) the thermal insulation cladding may include spacer parts into the mounting to create a dedicated enclosed air layer (12). To prevent a stream of air from entering via the enclosed air layer between the lower surface of the battery housing and the adjacent surface of the exterior cover, a sealing (11) at least around at least a part of the rim might be beneficial to close the enclosed air layer, preferably keeping the area enclosed as large as possible. The spacer function and the sealing might be integrated in the same material solution or may be made of a fibrous or foam material.

Alternatively, the thermal cladding (9) may be extended to include surrounding structures alongside the battery housing like for instance the stiffening beams not shown.

A battery electric vehicle with a thermal insulation cladding as shown in figure 2 may comprise a preferred layout as disclosed in figure 3. The thermal cladding 9 comprises an airtight core 13 comprising an olefin-based matrix and glass fibers, and having a thermal resistance (R-value) of the core layer of at least 0.0025 m².K/W .

The thermal insulating cladding is further comprising skin layers 14 and 15, whereby each skin layer comprises at least one layer of substantially parallel organised endless filaments in a second thermoplastic matrix. Preferably the endless filaments are glass filaments, and second thermoplastic matrix is a polypropylene based material. The skin may be built up of layers of unidirectional tapes comprising the parallel organised endless filaments embedded in a polypropylene or comparable matrix. Alternatively, organo sheets comprising glass filaments in for instance a polypropylene matrix may be used.

By covering both surfaces of the airtight core equally with a same skin layer a sandwich structure may be formed, and warpage may be reduced or even eliminated. Preferably the thermal resistance (R-value) of each skin is at least 0.0025 m².K/W per mm of thickness.

By adapting the thickness of the skin layers and the core layer it is possible to obtain a total thermal resistance (R-value) for the thermal insulation cladding between 0.004 and 0.15 m².K/W beneficial for thermal insulating the battery. Surprisingly a reduction of heat loss of at least 40% is already enough for the active battery thermal system to obtain or maintain the required optimum temperature for the batteries in a reduced time. It was found that without any thermal insulation the thermal system was not able to maintain or obtain the required temperature for the batteries after 3 hour driving in a 0°C environment. While the use of thermal insulation as disclosed and claimed already sees the thermal management system picking up after 20 to 30 minutes under the same conditions.

The thermal cladding according to the invention may be used as a thermal battery shield, a thermal underbody shield, a thermal shield for a battery box, exterior or interior cladding for car body parts, including any of a dash panel, door panel, flooring panel or trunk floor panel.

## Claims

1. Thermal insulation cladding for automotive applications comprising at least a thermoplastic airtight core layer comprising filaments or cut fibers embedded in a thermoplastic matrix, **characterised in that** the thermal resistance (R-value) of the core layer is at least 0.0025 m².K/W per mm of thickness, and the total thermal resistance (R-value) of the thermal insulation cladding is at least between 0.004 and 0.15 m².K/W, preferably between 0.01 and 0.04 m².K/W, more preferably between 0.01 and 0.035 m².K/W.

2. Thermal insulation cladding according to claim 1, whereby the thermoplastic matrix of the airtight core layer is a polyamide based or polyolefin based material.

3. Thermal insulation cladding according to claim 1 or claim 2, whereby the matrix of the airtight core layer comprises at least one polyolefin, preferably polypropylene or polyethylene.

4. Thermal insulation cladding one of the preceding claims, where by the matrix of the airtight core layer comprises a homopolymer of polypropylene and an olefin-based copolymer, preferably a block copolymer, preferably a polypropylene-polyethylene copolymer.

5. Thermal insulation cladding according claim 4, whereby the matrix of the core layer comprises not more than 30% by weight of the olefin-based copolymer.

6. Thermal insulation cladding according to one of the preceding claims, whereby the cut fibers of the airtight core layer comprise natural fibers and or glass fibers.

7. Thermal insulation cladding according to one of the preceding claims further comprising skin layers, whereby each skin layer comprises at least one layer of substantially parallel organised endless filaments in a second thermoplastic matrix, and whereby both sides of the core layer are covered with at least a skin layer to form a sandwich structure, and whereby the thermal resistance (R-value) of each skin is at least 0.0025 m².K/W per mm of thickness.

8. Thermal insulation cladding according to claim 7, whereby at least one skin layer comprises at least 2 and preferably between 3 and 9 layers of substantially parallel organised endless filaments in a second thermoplastic matrix, whereby the parallel organised endless filaments of one layer are parallel or perpendicular to those of the adjacent layer or layers.

9. Thermal insulation cladding according to claim 7 or 8, whereby the layers in the skins have a filament content of between 50% and 84% by weight.

10. Thermal insulation cladding according to one of claim 7, 8 or 9, whereby the second thermoplastic matrix of the skin layers comprise a polyamide based material or a polyolefin based material, preferably a polypropylene or a polyethylene based material.

11. Thermal insulation cladding according to one of the preceding claims further comprising at least one fibrous nonwoven layer comprising cut fibers or endless filaments and a thermoplastic binder, whereby the fibrous nonwoven layer has a thermal resistance (R-value) of at least 0.020 m².K/W per mm.

12. Thermal insulation cladding according to claim 11, whereby the cut fibers or endless filaments and the thermoplastic binder of the fibrous nonwoven layer are polyester based, preferably terephthalate based, preferably polyethylene terephthalate (PET) or polybutylene terephthalate (PBT).

13. A battery electric vehicle with a thermal insulation cladding according to one of the preceding claims for thermal insulation of the battery housing.

14. Use of the thermal insulation cladding of one of the preceding claims as a thermal battery shield, a thermal underbody shield, a thermal shield for a battery box, exterior or interior cladding for car body parts, including any of a dash panel, door panel, flooring panel or trunk floor panel.
